Europäisches Patentamt

European Patent Office

Office européen des brevets

(19)

(11) **EP 1 108 977 A1**

(12) **EUROPÄISCHE PATENTANMELDUNG**

(43) Veröffentlichungstag:
    **20.06.2001 Patentblatt 2001/25**

(51) Int Cl.⁷: **G01B 7/34**

(21) Anmeldenummer: **99125117.4**

(22) Anmeldetag: **16.12.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(71) Anmelder: **Infineon Technologies AG**
    **81669 München (DE)**

(72) Erfinder:
    • **Greschitz, Manfred**
      **8045 Graz (AT)**

    • **Gruber, Klaus**
      **8010 Graz (AT)**
    • **Helminger, Franz**
      **8040 Graz (AT)**
    • **Wolf, Franz**
      **8010 Graz (AT)**
    • **Scheucher, Albert**
      **8423 St. Veit/Vogau (AT)**

(74) Vertreter: **Maiwald, Walter, Dr. Dipl.-Chem.**
    **Maiwald Patentanwalts GmbH**
    **Postfach 33 05 23**
    **80065 München (DE)**

(54) **Sensor zur Bestimmung der Rauhigkeit einer Oberfläche**

(57)  Die Erfindung betrifft einen Sensor (10) zur Bestimmung der Rauhigkeit einer Oberfläche, mit:

- einem Messaufnehmer (12), der mehrere elektrisch leitende Elektrodenplättchen (16) aufweist, die elektrisch gegeneinander isoliert in einer Ebene liegen und eine Messoberfläche definieren; und

- einer Steuerschaltung (14), die mit den Elektrodenplättchen (16) verbunden und derart ausgebildet ist, dass sie diese mit einer vorbestimmten elektrischen Spannung versorgt und für jedes Elektrodenplättchen (16) die Änderung seiner Kapazität bestimmt, wenn die zu messende Oberfläche an die Messoberfläche gelegt wird.

FIG. 1

EP 1 108 977 A1

**Beschreibung**

Sensor zur Bestimmung der Rauhigkeit einer Oberfläche

Die Erfindung betrifft einen Sensor zur Bestimmung der Rauhigkeit einer Oberfläche.

Bekannte Messverfahren zur Bestimmung der Rauhigkeit einer Oberfläche offenbart ,,Dubbel, Taschenbuch für den Maschinenbau", ISBN 3-540-57650-9, 18. Auflage, Springer-Verlag Berlin, Seite W9. Dort sind das Tastschnittverfahren, das Lichtschnitt-, Interferenz- und Rastertunnelmikroskop, das Streulichtverfahren, das Kondensatorverfahren und das Luftspaltverfahren aufgeführt.

Beim Kondensatorverfahren wird eine Messelektrode mit einer dielektrischen, in die Oberflächenmikrogeometrie eindringende Zwischenschicht auf die Probenoberfläche gebracht. Für den sich so ergebenden Plattenkondensator kann aus der Beziehung zwischen Kapazität und Plattenabstand (im Vergleich mit ideal glatten Flächen) auf die ,,Glättungstiefe" der Probenoberfläche geschlossen werden.

Die bekannten Messverfahren erfordern teure Geräte und/oder einen hohen Aufwand bei der Auswertung der Messergebnisse.

Es ist daher Aufgabe der Erfindung, einen Sensor zur Bestimmung der Rauhigkeit einer Oberfläche zu schaffen, der bei guter örtlicher Auflösung einfach anzuwenden und kostengünstig herzustellen ist.

Diese Aufgabe wird durch einen Sensor zur Bestimmung der Rauhigkeit einer Oberfläche gemäß dem Patentanspruch 1 gelöst.

Die Funktionsweise dieses Sensors beruht auf der Änderung der Kapazität eines jeden Elektrodenplättchens, die durch die Dielektrizität der Probe, deren Oberfläche gemessen werden soll, hervorgerufen wird. Jedes Elektrodenplättchen kann als die eine Platte eines Kondensators angesehen werden, dessen andere Platte durch die übrigen, im wesentlichen aber durch die benachbarten Elektrodenplättchen gebildet wird. Solange die Probenoberfläche nicht an die Messoberfläche gelegt ist, hat jeder Kondensator eine bestimmte, niedrige Kapazität, da Luft eine Dielektrizitätszahl von $\varepsilon_r$, Luft $\approx 1$ hat. Wenn die

Probenoberfläche mit einer Dielektrizitätszahl $\varepsilon_{r, Probe} > 1$ an die Messoberfläche angelegt wird, dann steigt die Kapazität eines jeden Kondensators auf einen bestimmten Wert an. Dieser Wert hängt jedoch nicht nur gemäß der bekannten Gleichung:

$$C_{Probe} = \varepsilon_{r,Probe} \cdot C_{Luft}$$

von der Dielektrizität der Probenoberfläche ab, sondern auch gemäß des allgemeinen Zusammenhangs:

$$C = \varepsilon_0 \cdot \varepsilon_r \, A : d$$

von dem lokalen Abstand d zwischen der Probenoberfläche und dem zu diesem Kondensator gehörenden Elektrodenplättchen, der auf Grund der Rauhigkeit der Probenoberfläche von einem Elektrodenplättchen zum nächsten variiert: je kleiner der Abstand, desto größer die Kapazität. Die unterschiedlichen Kapazitäten der Elektrodenplättchen wiederum sind ein Maß für die Rauhigkeit der Probenoberfläche, während ihre Verteilung über die Messoberfläche Aufschluss über die Homogenität der Probenoberfläche gibt.

Die Steuerschaltung dient dazu, nach dem Anlegen der Oberfläche die einzelnen Kapazitäten auszulesen. Hierzu versorgt sie jedes Elektrodenplättchen mit einer vorbestimmten elektrischen Spannung. Die genaue Funktionsweise der Steuerschaltung ist von den sogenannten ,,kapazitiven Fingerabdruck-Sensoren" bekannt und wird daher hier nur kurz an einem einfachen Beispiel beschrieben.

Im folgenden wird angenommen, dass die Flächen der Elektrodenplättchen gleich groß sind. Die Steuerschaltung ist beispielsweise derart ausgebildet ist, dass sie die Elektrodenplättchen gemäß dem folgenden Verfahren mit elektrischer Spannung versorgt.

Nach dem Anlegen der Oberfläche legt die Steuerschaltung die Elektrodenplättchen auf das gleiche elektrische Potential von beispielsweise U = 5 V, so dass diese elektrisch geladen werden.

Anschließend steuert die Steuerschaltung jedes Elektrodenplättchen an, um die auf ihm gespeicherte elektrische Ladung zu messen. Da die Elektrodenplättchen die gleiche Fläche haben, hängt die elektrische Ladung auf einem bestimmten Elektrodenplättchen von seiner Kapazität ab, die wiederum, da die Dielektrizität der Probe örtlich konstant ist, von dem Abstand zwischen diesem Elektrodenplättchen und dem über diesem liegenden Teil der Probenoberfläche abhängt, wie zuvor beschrieben worden ist.

Die Steuerschaltung kann dann die ermittelten Messwerte zur weiteren Auswertung an eine Rechenanlage weitergeben, die diese beispielsweise entsprechend der Anordnung der Elektrodenplättchen in der Messoberfläche als Grauwerte ausgibt und/oder aus diesen eine Summe oder einen Mittelwert bildet.

Der Sensor gemäß der Erfindung weist keine Verschleißteile auf, ermöglicht eine einfache elektronische Auswertung und erfordert keinen hohen apparativen Aufwand. Außerdem kann seine Auflösung durch Verkleinerung der Elektrodenplättchen beinahe beliebig gesteigert werden.

Vorteilhafte Weiterbildung sind in den Unteransprüchen beschrieben.

Bevorzugt ist vorgesehen, dass die Elektrodenplättchen auf einem elektrisch isolierenden Substrat angeordnet und von einer elektrisch isolierenden Passivierungsschicht überdeckt sind. Ein derartiger Sensor kann besonders kostengünstig in der CMOS-Technik hergestellt werden. Außerdem können dann der Messaufnehmer und die Steuerschaltung auf einem gemeinsamen Chip angeordnet werden.

Im folgenden wird eine bevorzugte Ausführungsform der Erfindung an Hand der beigefügten Zeichnung näher beschrieben.

FIG. 1    ist eine Draufsicht eines Sensors zur Bestimmung der Rauhigkeit einer Oberfläche; und

FIG. 2    ist eine vergrößerte Schnittansicht des Sensors der FIG. 1, an dessen Messoberfläche die zu messende Oberfläche anliegt.

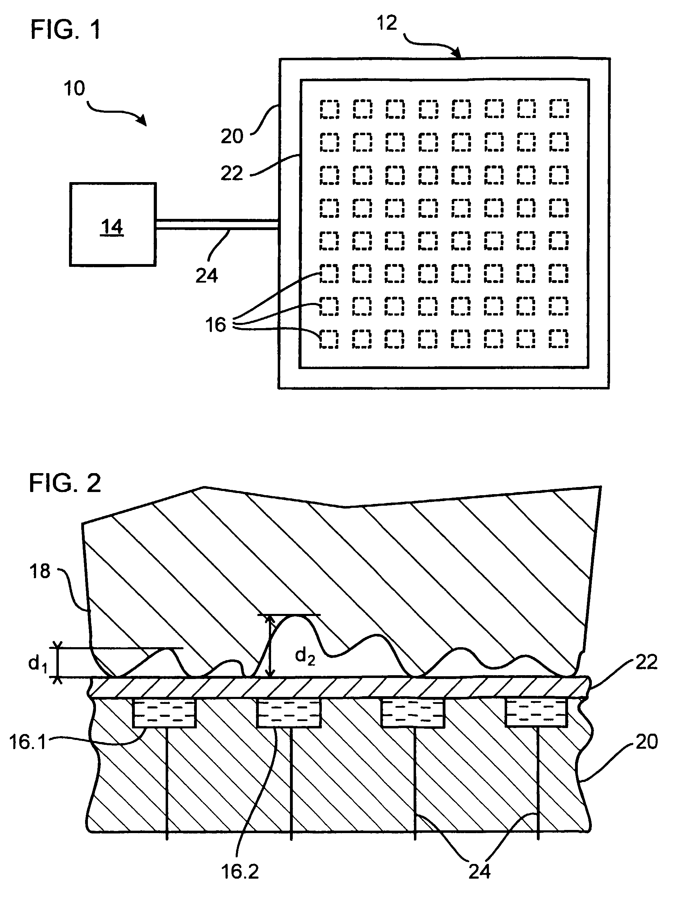

Die FIG. 1 zeigt schematisch einen Sensor 10 zur Bestimmung der Rauhigkeit einer Oberfläche in einer bevorzugten Ausführungsform. Der Sensor 10 weist einen Messaufnehmer 12 und eine Steuerschaltung 14 auf. Der Messaufnehmer 12 weist hier insgesamt 64 Elektrodenplättchen 16 mit gleicher Fläche auf, die in Gestalt einer quadratischen Matrix mit acht Reihen und acht Spalten äquidistant angeordnet sind und in einer Ebene liegen. Diese Elektrodenplättchen 16 definieren zusammen die Messoberfläche des Messaufnehmers 12. Die Steuerschaltung 14 ist mit jedem Elektrodenplättchen 16 verbunden, was in der FIG. 1 jedoch der besseren Übersicht wegen lediglich durch eine mit dem Messaufnehmer 12 verbundene Doppellinie angedeutet ist.

Die FIG. 2 zeigt in einem vergrößerten Ausschnitt den Messaufnehmer 12 und eine Probe 18, die mit ihrer Oberfläche, deren Rauhigkeit bestimmt werden soll, an der Messoberfläche anliegt.

Gemäß der FIG. 2 umfasst der Messaufnehmer 12 ein elektrisch isolierendes Substrat 20, wie es üblicherweise in der CMOS-Technik verwendet wird. Die Elektrodenplättchen 16, die bevorzugt aus Aluminium bestehen, sind bündig in die Oberseite des Substrats 20 eingebettet, so dass eine ebene Oberfläche gebildet wird. Diese ebene Oberfläche wird durch eine elektrisch isolierende Passivierungsschicht 22, beispielsweise aus Siliziumoxid, wie ebenfalls aus der CMOS-Technik bekannt ist, gegen störende Umwelteinflüsse wie Oxidation und Korrosion durch den Luftsauerstoff und Feuchtigkeit geschützt. Die Dicke dieser Passivierungsschicht 22 ist hier konstant, so dass ihre Oberseite eben und parallel zu der ebenen Oberfläche des Substrats 20 mit den eingebetteten Elektrodenplättchen 16 verläuft. Die Messoberfläche des Messaufnehmers 12 wird hier folglich durch diese ebene Oberseite der Passivierungsschicht 22 gebildet

Jedes Elektrodenplättchen 16 ist mit einer Leitung 24 zum Anschluss an die Steuerschaltung 14 (in der FIG. 2 nicht dargestellt) verbunden.

Wie in der FIG. 2 dargestellt ist, liegt die Probe 18 mit ihrer zu messenden Oberfläche auf der Messoberfläche, also der Oberseite der Passivierungsschicht 22. Auf Grund der Rauhigkeit der Probenoberfläche ist beispielsweise der Abstand $d_1$ zwischen dem in der FIG. 2 ganz links befindlichen Elektrodenplättchen 16.1 und dem direkt darüber liegenden Teil der Probenoberfläche kleiner als der Abstand $d_2$ zwischen dem in der FIG. 2 rechts daneben befindlichen Elektrodenplättchen 16.2 und dem direkt über diesem liegenden Teil der Probenoberfläche. Da alle Elektrodenplättchen 16 die gleiche Fläche A aufweisen, ist demnach wegen:

$$C = \varepsilon_0 \cdot \varepsilon_r \cdot A : d$$

die Kapazität $C_1$ des linken Elektrodenplättchens 16.1 größer als die Kapazität $C_2$ des rechten Elektrodenplättchens 16.2.

Folglich wird, wenn durch die Steuerschaltung an beide Elektrodenplättchen 16.1 und 16.2 die gleiche Spannung U angelegt wird, wegen:

$$Q = C \cdot U$$

das linke Elektrodenplättchen 16.1 eine größer Ladung $Q_1$ speichern, die größer als die von dem rechten Elektrodenplättchen 16.2 gespeicherte Ladung $Q_2$ ist. Die einzelnen Ladungen $Q_i$ der verschiedenen Elektrodenplättchen 16.i werden dann gemessen.

Da die Spannung U für alle Elektrodenplättchen 16 konstant ist, hängt also die gemessene Ladung $Q_i$ auf einem bestimmten Elektrodenplättchen 16.i nur von dessen Kapazität $C_i$ und somit von dessen Abstand $d_i$ zur Probenoberfläche ab.

Bezugszeichenliste

10    Sensor
12    Messaufnehmer
14    Steuerschaltung
16    Elektrodenplättchen
18    Probe
20    Substrat
22    Passivierungsschicht
24    Leitung

Patentansprüche

1.    Sensor (10) zur Bestimmung der Rauhigkeit einer Oberfläche, mit:

-    einem Messaufnehmer (12), der mehrere elektrisch leitende Elektrodenplättchen (16) aufweist, die elektrisch gegeneinander isoliert in einer Ebene liegen und eine Messoberfläche definieren; und
-    einer Steuerschaltung (14), die mit den Elektrodenplättchen (16) verbunden und derart ausgebildet ist, dass sie diese mit einer vorbestimmten elektrischen Spannung versorgt und für jedes Elektrodenplättchen (16) die Änderung seiner Kapazität bestimmt, wenn die zu messende Oberfläche an die Messoberfläche gelegt wird.

2.  Sensor nach Anspruch 1, dadurch **gekennzeichnet**, dass die Elektrodenplättchen (16) auf einem elektrisch isolierenden Substrat (20) angeordnet und von einer elektrisch isolierenden Passivierungsschicht (22) überdeckt sind.

3.  Sensor nach Anspruch 1 oder 2, dadurch **gekennzeichnet,** dass der Messaufnehmer (12) und die Steuerschaltung (14) auf einem gemeinsamen Chip (20) angeordnet sind.

FIG. 1

FIG. 2

Europäisches
Patentamt

**EUROPÄISCHER RECHERCHENBERICHT**

Nummer der Anmeldung

EP 99 12 5117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 779 497 A (LUCENT TECHNOLOGIES INC) 18. Juni 1997 (1997-06-18) * Spalte 2, Zeile 29 - Zeile 39 * * Spalte 4, Zeile 15 - Zeile 34; Abbildungen * | 1-3 | G01B7/34 |
| X | US 5 623 552 A (LANE WILLIAM F) 22. April 1997 (1997-04-22) * Spalte 6, Zeile 65 - Spalte 7, Zeile 16; Abbildung 5 * | 1,2 | |
| X | EP 0 041 693 A (SIEMENS AG) 16. Dezember 1981 (1981-12-16) * Seite 8, Zeile 32 - Seite 9, Zeile 17 * * Seite 9, Zeile 20 - Zeile 24; Abbildung 8 * | 1,2 | |
| A | US 5 281 921 A (NOVAK JAMES L ET AL) 25. Januar 1994 (1994-01-25) * Spalte 4, Zeile 7 - Zeile 10 * * Spalte 4, Zeile 44 - Zeile 57; Abbildungen 2A,B * | 1-3 | RECHERCHIERTE SACHGEBIETE (Int.Cl.7) G01B |

Der vorliegende Recherchenbericht wurde für alle Patentansprüche erstellt

| Recherchenort | Abschlußdatum der Recherche | Prüfer |
|---|---|---|
| DEN HAAG | 29. Mai 2000 | Pflugfelder, G |

**ANHANG ZUM EUROPÄISCHEN RECHERCHENBERICHT
ÜBER DIE EUROPÄISCHE PATENTANMELDUNG NR.**

EP 99 12 5117

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2000

| Im Recherchenbericht angeführtes Patentdokument | Datum der Veröffentlichung | Mitglied(er) der Patentfamilie | Datum der Veröffentlichung |
|---|---|---|---|
| EP 0779497 A | 18-06-1997 | US 6016355 A<br>CA 2190544 A<br>JP 9218006 A<br>US 6049620 A | 18-01-2000<br>16-06-1997<br>19-08-1997<br>11-04-2000 |
| US 5623552 A | 22-04-1997 | KEINE | |
| EP 0041693 A | 16-12-1981 | US 4353056 A<br>DE 3172656 D | 05-10-1982<br>21-11-1985 |
| US 5281921 A | 25-01-1994 | US 5378994 A<br>US 5473257 A | 03-01-1995<br>05-12-1995 |

EPO FORM P0461

Für nähere Einzelheiten zu diesem Anhang : siehe Amtsblatt des Europäischen Patentamts, Nr.12/82